# EUROPEAN PATENT APPLICATION

(11) **EP 4 498 643 A1**
(43) Date of publication of application: **29.01.2025**
(21) Application number: 24190519.9
(22) Date of filing: 24.07.2024
(51) Int. Cl.: H04L 12/40, H04B 3/54, H04L 12/403

(54) **COMMUNICATION METHOD AND APPARATUS BASED ON POLLING MECHANISM, AND RELAY PROTECTION APPARATUS**

(30) Priority: 24.07.2023 CN 202310912880
(71) Applicant: Siemens Aktiengesellschaft, 80333 München (DE)
(72) Inventor: DENG, Su Bi, Nanjing, 211100 (CN); BEYER, Jens, 12683 Berlin (DE); FUKUMOTO, Akira, 14167 Berlin (DE)
(74) Representative: Horn Kleimann Waitzhofer Schmid-Dreyer Patent- und Rechtsanwälte PartG mbB

(57) **Abstract**

The present invention provides a communication method and apparatus based on a polling mechanism, and a relay protection apparatus, the communication method being used for a power automation system, the power automation system comprising one master node and multiple slave nodes, the master node and the slave nodes communicating with each other on the basis of a polling mechanism, and the master node needing to send L requests each round, wherein L is a positive integer, and each request corresponds to one request time interval and one response time period, the request time interval indicating a minimum time period of the interval between the master node sending the i-th request in the present round and sending the i-th request in the previous round, and the response time period indicating a maximum time period from the master node having sent the i-th request to receiving a response sent by the slave node.

## Description

### TECHNICAL FIELD

The present invention relates to the field of power automation systems, and in particular to a communication method and apparatus that are based on a polling mechanism, and a relay protection apparatus.

### BACKGROUND ART

The RS-485 bus standard has been in existence for nearly 40 years, and the application scenarios thereof are very broad, for example, being used for scenarios in which transfer speed requirements are not high and changes are comparatively slow, such as environment temperature, etc.; therefore, many small electrical apparatuses with low-cost power distribution support RS485 communication.

The RS-485 bus standard supports a one-master multiple-slaves half-duplex communication mode. Generally, in an RS-485 communication bus, the master node polls the slave nodes on the bus one by one, and the slave nodes must respond to the master node according to a polling mechanism in order to then complete communication.

However, in many actual application scenarios, multiple nodes might simultaneously send data to the bus and cause a bus conflict.

### SUMMARY OF THE INVENTION

In view of this, the present invention proposes a communication method that is based on a polling mechanism, the communication method being used for a power automation system, the power automation system comprising one master node and multiple slave nodes, the master node and slave nodes communicating with each other on the basis of a polling mechanism, and the master node needing to send L requests each round, wherein L is a positive integer, and the communication method comprises:
if an i-th request in a present round that is sent by the master node is received,
then generating a target response to said i-th request, wherein i is a positive integer and i ≤ L,
wherein each request corresponds to one request time interval and one response time period, the request time interval indicating a minimum time period of the interval between the master node sending the i-th request in the present round and sending the i-th request in the previous round, and the response time period indicating a maximum time period from the master node having sent the i-th request to receiving a response sent by the slave node, and the communication method further comprising:
   judging whether a first time interval is greater than a first preset interval, and judging whether a new request sent by the master node is received currently, the first time interval being determined according to a receiving time of received said i-th request and a first actual time currently, and the first preset interval being determined according to a response time period corresponding to the i-th request; and
   if the judgment results are both no, then sending the target response to the master node.

After it is determined that a new request sent by the master node has not been received, and before the target response is sent to the master node, the communication method described above optionally further comprises:
acquiring a second actual time currently;
determining a second time interval according to the received time and the second actual time;
judging whether the second time interval is greater than a second preset interval, where the second preset interval = response time period corresponding to the i-th request - k/baud-rate, wherein k is a preset calibration factor; and
if the judgment result is no, then triggering an operation to send the target response to the master node.

According to the communication method described above, optionally, if the judgment result of judging whether the second actual time interval is greater than the second preset interval is yes, then the target response is discarded.

According to the communication method described above, optionally, after the judgment result of judging whether the first time interval is greater than the first preset interval is no, an operation is executed to judge whether a new request sent by the master node is currently received.

According to the communication method described above, optionally, if either judgment result of judging whether a first time interval is greater than a first preset interval and of judging whether a new request sent by the master node is currently received is yes, then the target response is discarded.

When an i-th request sent by the master node is received, the communication method described above optionally further comprises: attaching a special identifier to the i-th request;
when starting to execute generating a target response to the i-th request, further comprising: eliminating the special identifier; and
the step of judging whether a new request sent by the master node is currently received comprising: judging whether there is currently a request with a special identifier, and if the judgment result is no, then determining that a new request sent by the master node has not been received currently.

According to the communication method described above, optionally, the first time interval is determined to be equal to the response time period corresponding to the i-th request; or
the first time interval = response time period corresponding to the i-th request - k/baud-rate, wherein k is a preset calibration factor.

The present invention further provides a communication method that is based on a polling mechanism, the communication method being used for a power automation system, the power automation system comprising one master node and multiple slave nodes, the master node and the slave nodes communicating with each other on the basis of a polling mechanism, and the master node needing to send L requests each round, wherein L is a positive integer.

Each request corresponds to one request time interval and one response time period, the request time interval indicating a minimum time period of the interval between sending an i-th request in the present round and sending the i-th request in the previous round, and the response time period indicating a maximum time period from the master node having sent a request to receiving a response sent by the slave node, and the communication method comprising:
if it is identified that an i-th request must be sent to a slave node, the i-th request being one of L requests in the present round, then judging whether a third time interval between said i-th request and an i-th request sent in the previous round is greater than or equal to a request time interval corresponding to said i-th request, wherein i is a positive integer and i ≤ L; and
if the judgment result is yes, then sending said i-th request to the slave node.

After the i-th request is sent to the slave node, the communication method described above optionally further comprises:
judging whether a target response sent by the slave node is received within a response time period corresponding to an i-th request, the target response being generated on the basis of said i-th request; and
if the judgment result is no, then determining that said i-th request is an abnormal request.

After said i-th request is determined to be an abnormal request, the communication method described above optionally further comprises:
judging whether i is less than or equal to L; and
if the judgment result is yes, then updating the value of i + 1 to i, and returning to executing an operation to identify whether an i-th request must be sent to a slave node.

The present invention also provides a communication apparatus that is based on a polling mechanism, the communication apparatus being used for a power automation system, the power automation system comprising one master node and multiple slave nodes, the master node and the slave nodes communicating with each other on the basis of a polling mechanism, and the master node needing to send L requests each round, wherein L is a positive integer, and the communication apparatus comprising:
a generating unit, used for: if an i-th request in a present round that is sent by the master node is received, generating a target response to said i-th request, wherein i is a positive integer and i ≤ L,
wherein each request corresponds to one request time interval and one response time period, the request time interval indicating a minimum time period of the interval between the master node sending the i-th request in the present round and sending the i-th request in the previous round, and the response time period indicating a maximum time period from the master node having sent the i-th request to receiving a response sent by the slave node, and the communication apparatus further comprising:
   a first judgment unit, used for judging whether a first time interval is greater than a first preset interval, and judging whether a new request sent by the master node is received currently, the first time interval being determined according to a receiving time of received said i-th request and a first actual time currently, and the first preset interval being determined according to a response time period corresponding to an i-th request; and
   a first sending unit, used for sending the target response to the master node.

Optionally, the communication apparatus described above further comprises:
an acquisition unit, used for acquiring a current second actual time;
a determining unit, used for determining a second time interval according to the receiving time and the second actual time; and
a second judgment unit, used for judging whether the second time interval is greater than a second preset interval, where the second preset interval = response time period corresponding to the i-th request - k/baud-rate, wherein k is a preset calibration factor, and if the judgment result is no, then triggering the first sending unit.

According to the communication apparatus described above, optionally, the second judgment unit is further used for: if the judgment result of judging whether the second actual time interval is greater than the second preset interval is yes, triggering a discarding unit; and
the communication apparatus further comprising the discarding unit, and the discarding unit being used for discarding the target response.

Optionally, the communication apparatus described above further comprises:
a marking unit, used for: when an i-th request sent by the master node is received, attaching a special identifier to said i-th request; and
an eliminating unit, used for: when starting to execute generating a target response to the i-th request, eliminating the special identifier.

According to the communication apparatus described above, optionally, the first time interval is determined to be equal to the response time period corresponding to the i-th request; or
the first time interval = response time period corresponding to the i-th request - k/baud-rate, wherein k is a preset calibration factor.

The present invention further provides a communication apparatus that is based on a polling mechanism, the communication apparatus being used for a power automation system, the power automation system comprising one master node and multiple slave nodes, the master node and the slave nodes communicating with each other on the basis of a polling mechanism, and the master node needing to send L requests each round, wherein L is a positive integer,
each request corresponds to one request time interval and one response time period, the request time interval indicating a minimum time period of the interval between sending an i-th request in the present round and sending an i-th request in the previous round, and the response time period indicating a maximum time period from the master node having sent a request to receiving a response sent by the slave node, and the communication apparatus comprising:
an identification unit, used for identifying whether an i-th request must be sent to a slave node, the i-th request being one of L requests in the present round, and if the identification result is yes, then triggering a third judgment unit, wherein i is a positive integer and i ≤ L;
the third judgment unit, used for judging whether a third time interval between said i-th request and an i-th request sent in the previous round is greater than or equal to a request time interval corresponding to said i-th request, and if the judgment result is yes, then triggering a second sending unit; and
the second sending unit, used for sending the i-th request to the slave node.

Optionally, the communication apparatus described above further comprises:
a fourth judgment unit, used for judging whether a target response sent by the slave node is received within a response time period corresponding to an i-th request, the target response being generated on the basis of said i-th request; and if the judgment result is no, then determining that said i-th request is an abnormal request.

Optionally, the communication apparatus described above further comprises:
a fifth judgment unit, used for judging whether i is less than or equal to L, and if the judgment result is yes, triggering an updating unit; and
the updating unit, used for updating a value of i + 1 to i, then triggering the identification unit.

The present invention also provides a relay protection apparatus, comprising:
at least one memory, used for storing an instruction; and
at least one processor, used for executing the communication method that is based on a polling mechanism of any one of the above embodiments according to the instruction that is stored in the memory.

According to the present invention, a corresponding request time interval and response time period are preset for each request, and whether a communication conflict might exist on a current communication network is determined by means of a dual judgment, which can reduce the probability of communication conflicts occurring.

### BRIEF DESCRIPTION OF THE DRAWINGS

Preferred embodiments of the present invention are described in detail below with reference to the drawings, to give those skilled in the art a clearer understanding of the abovementioned and other features and advantages of the present invention. In the drawings:
Fig. 1 is a schematic flowchart of a communication method that is based on a polling mechanism according to an embodiment of the present invention.
Fig. 2 is a schematic flowchart of the communication method that is based on a polling mechanism according to another embodiment of the present invention.
Fig. 3A is a schematic flowchart of the communication method that is based on a polling mechanism according to another embodiment of the present invention.
Fig. 3B is a schematic flowchart of the communication method that is based on a polling mechanism according to another embodiment of the present invention.
Fig. 4 is a schematic structural diagram of a communication apparatus that is based on a polling mechanism according to an embodiment of the present invention.
Fig. 5 is a schematic structural diagram of the communication apparatus that is based on a polling mechanism according to another embodiment of the present invention.
Fig. 6A is a schematic structural diagram of the communication apparatus that is based on a polling mechanism according to another embodiment of the present invention.
Fig. 6B is a schematic structural diagram of the communication apparatus that is based on a polling mechanism according to another embodiment of the present invention.

### DETAILED DESCRIPTION OF THE INVENTION

To clarify the objective, technical solution and advantages of the present invention, the present invention is explained in further detail below through embodiments. A noun or pronoun referring to a person in the present patent application is not limited to a specific gender.

A communication method that is based on a polling mechanism of the present invention is suitable for a power automation system, the power automation system comprising one master node and multiple slave nodes, and the master node and the slave nodes communicating with each other on the basis of a polling mechanism. Specifically, an RS-485 bus standard is used for communication between the master node and the slave nodes. The polling mechanism means that the master node must send a request to each slave node in sequence, and each slave node returns a response to this request in sequence. Generally, there are multiple requests in each round; for example, in the present invention, there are L requests in each round, wherein L is a positive integer. The master node sends a request to a slave node; after receiving the request, the slave node generates and sends a corresponding response to the master node.

The nodes in the present invention may be miniature devices that can communicate with each other, such as relay protection apparatuses, temperature sensors, pressure sensors, humidity sensors, etc. in a switch cabinet. The relay protection apparatus may be the master node, and the other slave nodes may be chosen according to actual requirements.

In order to avoid a communication conflict between the multiple nodes, the present invention presets the request time interval and the response time period that correspond to each request sent by the master node.

The request time interval indicates a minimum time period of the interval between sending an i-th request in the present round and sending an i-th request in the previous round. For example, the required interval between the first request in the present round and the first request in the previous round is at least 10 seconds, the required interval between the second request in the present round and the second request in the previous round is at least 12 seconds, and the required interval between the third request in the present round and the third request in the previous round is at least 0.5 seconds. In order to avoid a communication conflict, each request can only be sent after waiting for completion of transmission of the previous request and corresponding response. In an actual communication process, if a time interval with a previous request is greater than a preset request time interval and response time period that correspond to the previous request, then the request may be sent.

The response time period indicates a maximum time period from the master node sending a request to the slave node to receiving a response sent by the slave node; for example, after the master node sends a first request, a response to this first request should be received within 1 second, this 1 second corresponding to the response time period that corresponds to the first request, and, after the master node sends a second request, a response to this second request should be received within 0.5 seconds, this 0.5 seconds corresponding to the response time period of the second request, and each response time period may be preset according to actual situations. It should be explained that the "response time period" here refers to the longest time from the master node having sent the request to receiving a response.

### Embodiment 1

The present embodiment provides a communication method that is based on a polling mechanism, the communication method being executed by a communication apparatus that is based on a polling mechanism; the communication apparatus may be integrated in a slave node or be a slave node.

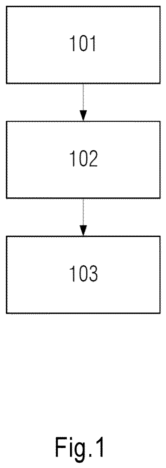

Fig. 1 shows a schematic flowchart of a communication method that is based on a polling mechanism according to an embodiment of the present invention. The communication method comprises:
Step 101, if an i-th request in a present round that is sent by the master node is received, then generating a target response to said i-th request, where i is a positive integer and i ≤ L.

The master node sends the i-th request in the present round to a slave node. After receiving said i-th request, the slave node starts to process said i-th request, and generates a corresponding target response.

Step 102, judging whether a first time interval is greater than a first preset interval, and judging whether a new request sent by the master node is received currently, the first time interval being determined according to a receiving time of received said i-th request and a first actual time currently, and the first preset interval being determined according to a response time period corresponding to the i-th request.

Before step 102, the receiving time when said i-th request is received is first acquired, for example, when the communication apparatus receives said i-th request, the time is recorded as a receiving time that corresponds to said i-th request. Here, the first time interval = current first actual time - receiving time, that is, first actual time minus receiving time.

Here, the first preset interval may be equal to a preset response time period that corresponds to the i-th request, and may be obtained after correcting the preset response time period that corresponds to the i-th request, and specifically may be chosen according to actual requirements; this is not detailed unnecessarily here.

Whether the communication apparatus receives a new request sent by the master node may be ascertained in various ways. For example, when a request sent by the master node is received, a special identifier is attached to said request. When starting to execute generating a target response to the i-th request, said special identifier is eliminated. Thus, the communication apparatus, by means of searching for whether there is a request with a special identifier, can determine whether a new request sent by the master node has been received.

Regarding step 102, after it is judged whether a first time interval is greater than a first preset interval, an operation may then be executed of judging whether currently a new request sent by the master node is received, or after it is first judged whether currently a new request sent by the master node is received, an operation may then be executed of judging whether the first time interval is greater than the first preset interval. For example, if a judgment result of judging whether the first time interval is greater than a first preset interval is yes, the target response can be discarded and not sent to the master node; if the judgement result is no, then an operation is further executed of judging whether currently a new request sent by the master node is received; if a judgement result of judging whether currently a new request sent by the master node is received is yes, then the target response is discarded and not sent to the master node, and if the judgement result is no, then a subsequent operation can be executed. Of course, two judgment operations can also be performed synchronously, which is not unnecessarily detailed here.

Step 103, if the judgment results are both no, then sending the target response to the master node.

For example, if a first preset interval = a response time period that corresponds to the i-th request, in a situation where the first time interval is greater than the first preset interval, it means that the target response cannot be sent to the master node on time, and if sent at this time then a communication conflict is likely to occur on a communication line. Therefore, the target response can be discarded to prevent a conflict.

Where it is judged that currently a new request sent by the master node is received, it means that the master node has sent a new request in a situation where a target response to the i-th request has not been received, and at this time, sending a target response again will likely cause a communication conflict, and therefore the target response can be discarded to prevent a conflict. For a new request, operations of steps 101 - 103 can be executed.

According to a communication method that is based on a polling mechanism of the present invention, a corresponding request time interval and response time period are preset for each request, and whether a communication conflict might exist on a current communication network is determined by means of a dual judgment, which can reduce the probability of communication conflicts occurring.

### Embodiment 2

The present embodiment will further explain the communication method that is based on a polling mechanism of embodiment 1.

After it is determined that a new request sent by the master node has not been received, and before a target response is sent to the master node, the communication method further comprises:
acquiring a current second actual time;
determining a second time interval according to a receiving time and the second actual time;
judging whether the second time interval is greater than or equal to a second preset interval, where the second preset interval = preset response time period corresponding to the i-th request - k/baud-rate, wherein k is a preset calibration factor; and
if the judgment result is no, then triggering an operation to send a target response to the master node.

In the present embodiment, the second preset interval is obtained on the basis of the response time period corresponding to the i-th request being corrected. In the present embodiment, k is a preset calibration coefficient, a value range thereof is 30 - 50, and the baud-rate is the same communication rate as agreed by both parties to serial communication.

In the present embodiment, the second time interval = current second actual time - receiving time.

Below, the present embodiment is explained using different scenarios:

### Scenario I:

A0, if an i-th request in a present round that is sent by the master node is received, then generating a target response to said i-th request;
A1, judging whether a first time interval is greater than a first preset interval, the first preset interval being equal to a response time period corresponding to the i-th request, and if a judgment result is no then moving to A2;
A2, judging whether currently a new request sent by the master node is received, and if the judgment result is no, then moving to A3;
A3, acquiring a current second actual time, determining a second time interval according to a receiving time and the second actual time, judging whether the second time interval is greater than a second preset interval, where the second preset interval = preset response time period corresponding to the i-th request - k/baud-rate, and if the judgment result is no, then moving to A4;
A4, sending a target response to the master node.

In this scenario I, it is first roughly judged, by means of A1, whether a sending time of said target response exceeds the preset response time period. If the judgment result is no, then it is judged whether a new request is received by means of A2, and if the judgment result is no, then it is further precisely judged, by means of A3, whether the sending time of said target response has already exceeded the preset response time period, and since a period of time has already elapsed since A1, a judgment is made again and a judgment is made using the modified response time period, which can increase accuracy. These three types of judgment can avoid a communication conflict.

### Scenario II:

B0, if an i-th request in a present round that is sent by the master node is received, then generating a target response to said i-th request;
B 1, judging whether currently a new request sent by the master node is received, and if the judgment result is no, then moving to B2;
B2, judging whether a first time interval is greater than a first preset interval, the first preset interval being equal to a response time period corresponding to the i-th request, and if a judgment result is no then moving to B3;
B3, acquiring a current second actual time, determining a second time interval according to a receiving time and the second actual time, judging whether the second time interval is greater than a second preset interval, and if the judgment result is no, then moving to B4;
B4, sending a target response to the master node.

In scenario II, it is first judged, by means of B 1, whether a new request is received, and if the judgment result is no, then it is roughly judged, by means of B2, whether a sending time of said target response exceeds the preset response time period, and if the judgment result is no, then it is further precisely judged, by means of B3, whether the time of sending said target response has already exceeded the preset response time period. These three types of judgment can avoid a communication conflict.

### Scenario III:

C0, if an i-th request in a present round that is sent by the master node is received, then generating a target response to said i-th request;
C 1, judging whether a first time interval is greater than a first preset interval, the first preset interval being equal to a response time period corresponding to the i-th request - k/baud-rate, and if a judgment result is no then moving to C2;
C2, judging whether currently a new request sent by the master node is received, and if the judgment result is no, then moving to C3;
C3, acquiring a current second actual time, determining a second time interval according to a receiving time and the second actual time, judging whether the second time interval is greater than a second preset interval, where the second preset interval = response time period corresponding to the i-th request - k/baud-rate, and if the judgment result is no, then moving to C4;
C4, sending a target response to the master node.

In scenario III, it is first precisely judged, by means of C 1, whether a sending time of said target response exceeds the preset response time period. If the judgment result is no, then it is judged, by means of C2, whether a new request is received, and if the judgment result is no, then it is further precisely judged, by means of C3, whether the sending time of said target response has already exceeded the preset response time period, and since a period of time has already elapsed since C 1, a precise judgment is made again, which can increase accuracy. These three types of judgment can avoid a communication conflict.

The first actual time and second actual time used here indicate times when the sending of said target response is attempted, and therefore the current time is used.

Optionally, if the judgment result of judging whether the second time interval is greater than a second preset interval is yes, then the target response is discarded. If said target response is sent at this time, then a communication conflict is likely to occur, and therefore said target response must be discarded, to prevent a communication conflict.

According to the present embodiment, a communication conflict can be further prevented by means of judging whether a second time interval is greater than a response time period that corresponds to an i-th request after correction.

### Embodiment 3

The present embodiment provides a communication method that is based on a polling mechanism, the communication method being used for a power automation system, the power automation system comprising one master node and multiple slave nodes, the master node and the slave nodes communicating with each other on the basis of a polling mechanism, and the master node needing to send L requests each round, wherein L is a positive integer, and each request correspondingly has a request time interval and a response time period. The communication method of the present embodiment is executed by a communication apparatus that is based on a polling mechanism; the communication apparatus may be integrated with a master node or itself be a master node.

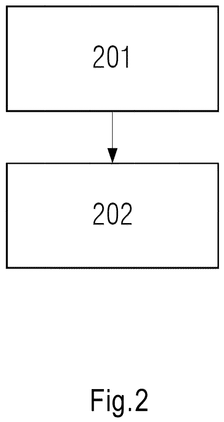

Fig. 2 shows a schematic flowchart of a communication method that is based on a polling mechanism according to the present embodiment. The communication method based on a polling mechanism comprises:
Step 201, if it is identified that an i-th request must be sent to a slave node, the i-th request being one of L requests in the present round, then judging whether a third time interval between said i-th request and an i-th request sent in the previous round is greater than or equal to a request time interval corresponding to said i-th request, wherein
   i is a positive integer and i ≤ L.
   Regarding the communication apparatus in the master node, it is necessary to send requests to the slave nodes in sequence on the basis of the polling mechanism. Before sending a request, it may first be judged whether a third time interval between said i-th request and the i-th request in the previous round already satisfies a requirement for a request time interval.
Step 202, if the judgment result is yes, then sending the i-th request to the slave node.

If the judgment result is yes, then it means that no message should be transmitted on the current communication line. At this time, sending said i-th request cannot cause a communication conflict.

Optionally, after step 202, the method may further comprise:
judging whether a target response sent by the slave node is received within a response time period corresponding to an i-th request, the target response being generated on the basis of said i-th request; and
if the judgment result is no, then determining said i-th request is an abnormal request.

If a target response is not received within a response time period, it means that there has probably been a communication conflict, or the slave node has encountered a fault. As an exemplary explanation, this abnormal request can be marked, and a reason can subsequently be searched for. In addition, in the next round of requests, content of said i-th request can be resent.

Optionally, after said i-th request is determined to be an abnormal request, the method further comprises:
judging whether i is less than or equal to L; and
if the judgment result is yes, then updating the value of i + 1 to i, and returning to executing an operation to identify whether an i-th request must be sent to a slave node.

After said i-th request is determined to be an abnormal request, the next request judgment cycle is entered.

According to the present embodiment, before the request is sent, it is first judged whether the third time interval between same and the i-th request of the previous round is greater than or equal to a request time interval that corresponds to said i-th request, and performing sending only if the judgment result is yes, which can thus avoid a communication conflict.

### Embodiment 4

The present embodiment provides a specific example of the communication method based on the polling mechanism described above.

In the present embodiment, the master node and the slave nodes communicate with each other by means of an RS-485 bus. In this scenario, there is less communication data between the master node and slave nodes. The master node is a relay protection apparatus, for example; the slave node is a temperature sensor, for example; and the multiple temperature sensors are distributed at different positions in a switch cabinet.

In the present embodiment, supposing the number of slave nodes is 10, then each slave node corresponds to 1 request, and so L is 10.

### Master node:

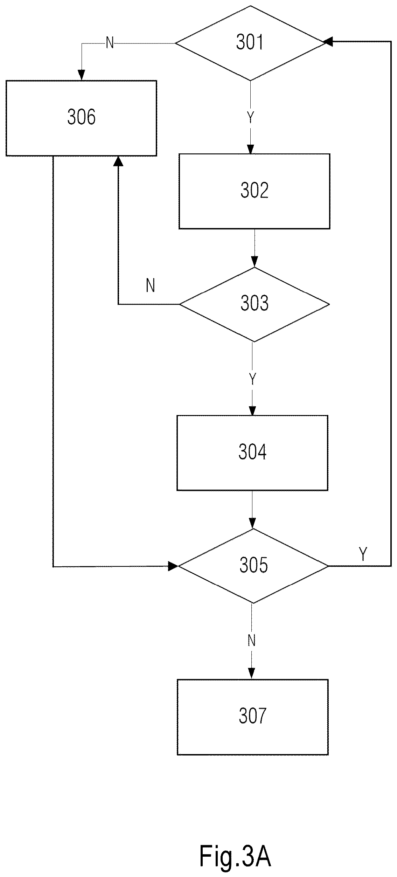

Fig. 3A shows a schematic flowchart of a communication method that is based on a polling mechanism executed by a master node.

Step 301, if the master node identifies that an i-th request must be sent to a slave node, then judging whether a third time interval between said i-th request and an i-th request in the previous round is greater than or equal to a request time interval corresponding to said i-th request. If the judgment result is yes, then moving to step 302, and otherwise moving to step 306.

Step 302, the master node sending the i-th request to the i-th slave node, and moving to step 303.

Step 303, judging whether the master node receives a response returned by the i-th slave node within a response time period corresponding to the i-th request, and if the judgment result is yes, then moving to step 304, and otherwise moving to step 306.

Step 304, marking the i-th request in the present round as a normal request, and moving to step 305.

If said i-th request is not a normal request (that is, an abnormal request), failed request content is used for the i-th request in a subsequent poll until the i-th request is a normal request.

Step 305, using the value of i + 1 as the updated value of i, and determining whether the updated value of i is less than or equal to L. If the judgment result is yes, then returning to execute step 301, and otherwise executing step 307.

Step 306, marking the i-th request as an abnormal request, and returning to execute step 305.

Step 307, triggering a sending operation for a next round of requests.

### Slave nodes:

In the present embodiment, the slave nodes divide into a bottom layer and an upper layer, the bottom layer being used for communicating with the master node, and the upper layer being used for processing a received request.

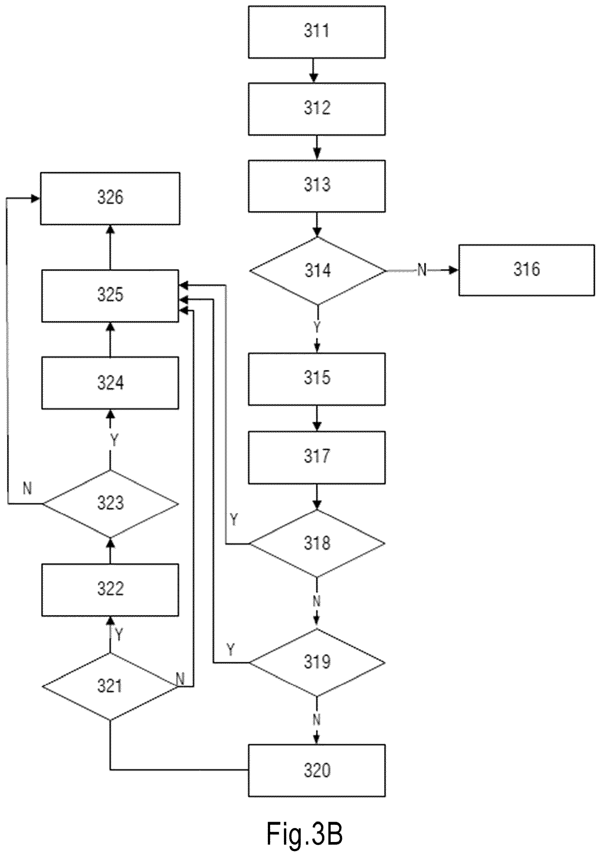

Fig. 3B shows a communication method that is based on a polling mechanism executed by a slave node side.

Step 310, the bottom layer receiving an i-th request sent by the master node, and moving to step 311.

Step 311, the bottom layer attaching a special identifier to said i-th request, and recording a receiving time t1 of said i-th request, and moving to step 312.

Step 312, the bottom layer sending said i-th request to the upper layer for processing, and moving to step 313.

Step 313, the upper layer receiving said i-th request, and eliminating the attached special identifier of said i-th request, and moving to step 314.

Step 314, inspecting said i-th request, and if the inspection is passed, executing step 315, otherwise executing step 316.

For example, whether a destination address in said i-th request is the same as the present slave node address is inspected, and if the same, then the inspection being passed, and if not the same, then the inspection not being passed. Other items can be inspected according to actual requirements, which is not detailed unnecessarily here.

Step 315, generating a target response to said i-th request, and sending same to the bottom layer, and moving to step 317.

Step 316, discarding the i-th request.

step 317, acquiring a current first sending time t2, and according to the following formula, determining a first time interval: first time interval = t2 - t1, and moving to step 318.

Step 318, judging whether the first time interval is greater than the response time period corresponding to the i-th request, and if the judgment result is no, then executing step 319, otherwise executing step 325.

Step 319, judging whether the bottom layer currently has a request with a special identifier, and if the judgment result is no, then executing step 320, otherwise executing step 325.

Step 320, acquiring a current second actual time t3, and according to the following formula, determining a second time interval: second time interval = t3 - t1, and moving to step 321.

Step 321, judging whether the second time interval is greater than a second preset interval, and if the judgment result is no, then executing step 322, otherwise executing step 325.

Second preset interval = response time period corresponding to the i-th request - k/baud-rate, wherein k is a preset calibration factor.

Step 322, sending a target response, and moving to step 323.

Step 323, judging whether a destination address for sending a target response is the same as a sending address of a received i-th request, and if the same, then executing step 324, and otherwise executing step 326.

Step 324, emptying a cache and returning True.

Step 325, discarding the target response, and executing step 326.

Step 326, emptying a cache and returning False.

Returning True and False is used for causing the slave node to ascertain a result of present processing.

### Embodiment 5

The present embodiment provides a communication apparatus that is based on a polling mechanism, the communication apparatus being used for a power automation system, the power automation system comprising one master node and multiple slave nodes, the master node and the slave nodes communicating with each other on the basis of a polling mechanism, and the master node needing to send L requests each round, wherein L is a positive integer. The communication apparatus may be a slave node or integrated in a slave node.

In the present embodiment, each request correspondingly has one request time interval and one response time period, the request time interval indicating a minimum time period of the interval between the master node sending an i-th request in the present round and sending an i-th request in the previous round, and the response time period indicating a maximum time period from the master node having sent an i-th request to receiving the response sent by the slave node.

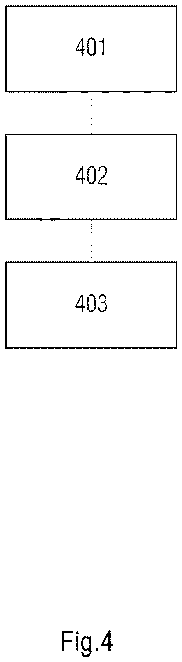

As shown in Fig. 4, the communication apparatus comprises a generating unit 401, a first judgment unit 402 and a first sending unit 403.

The generating unit 401 is used for generating a target response to an i-th request if the i-th request sent in the present round by the master node is received, wherein i is a positive integer and i ≤ L; the first judgment unit 402 is used for judging whether a first time interval is greater than a first preset interval, and judging whether a new request sent by the master node is received currently, the first time interval being determined according to a receiving time of received said i-th request and a current first actual time, and the first preset interval being determined according to a response time period corresponding to an i-th request; and the first sending unit 403 is used for sending a target response to the master node.

The methods of operations of these units in this embodiment are the same as those in the embodiments described above, so they are not described again here.

According to a communication apparatus that is based on a polling mechanism of the present embodiment, a corresponding request time interval and response time period are preset for each request, and whether a communication conflict might exist on a current communication network is determined by means of a dual judgment, which can reduce the probability of communication conflicts occurring.

### Embodiment 6

The present embodiment will further explain the communication apparatus that is based on a polling mechanism in embodiment 4.

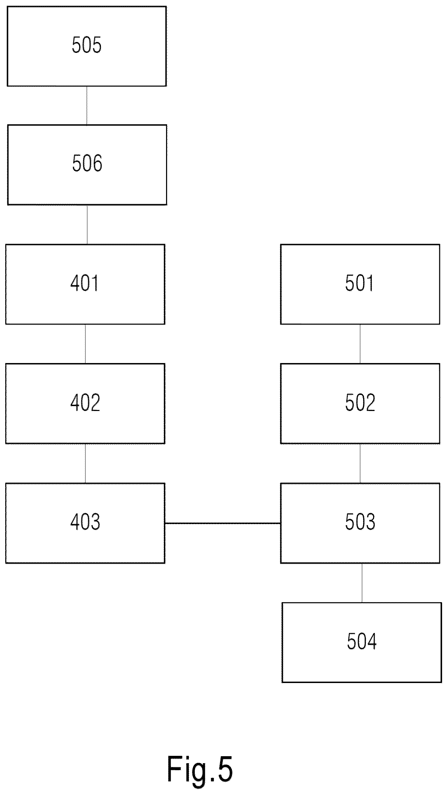

Fig. 5 shows a schematic flowchart of a communication apparatus that is based on a polling mechanism according to the present embodiment. The communication apparatus that is based on a polling mechanism further comprises an acquisition unit 501, a determining unit 502 and a second judgment unit 503.

The acquisition unit 501 is used for acquiring a current second actual time; the determining unit 502 is used for determining a second time interval according to a receiving time and the second actual time; the second judgment unit 503 is used for judging whether the second time interval is greater than a second preset interval, where the second preset interval = response time period corresponding to the i-th request - k/baud-rate, wherein k is a preset calibration factor, and if the judgment result is no, then triggering the first sending unit 403.

Optionally, the second judgment unit 503 is further used for: if the judgment result of judging whether the second actual time interval is greater than a second preset interval is yes, then triggering a discarding unit 504; and the communication apparatus further comprises the discarding unit 504, the discarding unit 504 being used for discarding a target response.

Optionally, in the present embodiment, the communication apparatus further comprises a marking unit 505 and an eliminating unit 506, wherein the marking unit 505 is used for attaching a special identifier to the i-th request when the i-th request sent by the master node is received; the eliminating unit 506 is used for eliminating the special identifier when generation of the target response to the i-th request is started.

Optionally, the first time interval is determined to be equal to the response time period corresponding to the i-th request; or
first time interval = response time period corresponding to the i-th request - k/baud-rate, wherein k is a preset calibration factor.

The methods of operations of these units in this embodiment are the same as those in the embodiments described above, so they are not described again here.

According to the present embodiment, a communication conflict can be further prevented by means of judging whether a second time interval is greater than a response time period that corresponds to an i-th request after correction.

### Embodiment 7

The present embodiment provides a communication apparatus that is based on a polling mechanism, the communication apparatus being used for a power automation system, the power automation system comprising one master node and multiple slave nodes, the master node and the slave nodes communicating with each other on the basis of a polling mechanism, and the master node needing to send L requests each round, wherein L is a positive integer. The communication apparatus that is based on a polling mechanism in the present embodiment may be a master node or integrated with a master node.

In the present embodiment, each request correspondingly has one request time interval and one response time period, the request time interval indicating a minimum time period of the interval between sending an i-th request in the present round and sending an i-th request in the previous round, and the response time period indicating a maximum time period from the master node having sent the request to receiving the response sent by the slave node.

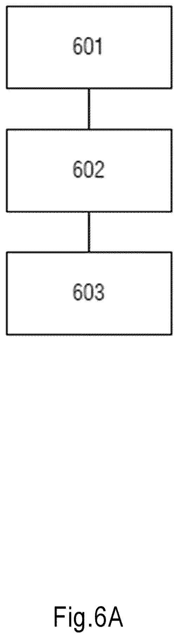

Fig. 6A shows a structural schematic flowchart of a communication apparatus that is based on a polling mechanism according to the present embodiment. The communication apparatus that is based on a polling mechanism comprises an identification unit 601, a third judgment unit 602 and a second sending unit 603.

The identification unit 601 is used for identifying whether it is necessary to send an i-th request to a slave node, the i-th request being one of L requests in the present round, if the identification result is yes, then triggering the third judgment unit 602, wherein i is a positive integer and i ≤ L; the third judgment unit 602 is used for judging whether the third time interval between the i-th request and the i-th request sent in the previous round is greater than or equal to the request time interval corresponding to the i-th request, and if the judgment result is yes, then triggering the second sending unit 603; the second sending unit 603 being used for sending the i-th request to the slave node.

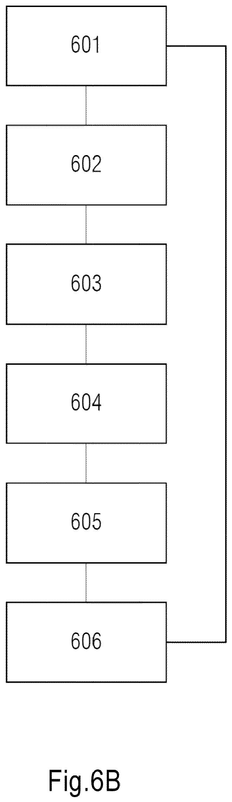

Optionally, as shown in Fig. 6B, the communication apparatus that is based on a polling mechanism in the present embodiment further comprises a fourth judgment unit 604, which is used for judging whether a target response sent by the slave node is received within a response time period corresponding to an i-th request, the target response being generated on the basis of said i-th request, and if the judgment result is no, then determining said i-th request is an abnormal request.

Optionally, as shown in Fig. 6B, the communication apparatus that is based on a polling mechanism in the present embodiment further comprises a fifth judgment unit 605 and an updating unit 606. The fifth judgment unit 605 is used for judging whether i is less than or equal to L, and if the judgment result is yes, triggering the updating unit 606; and the updating unit 606 is used for updating the value of i + 1 to i, and then triggering the identification unit 601.

The methods of operations of these units in this embodiment are the same as those in the embodiments described above, so they are not described again here.

According to the present embodiment, before the request is sent, it is first judged whether the third time interval between same and the i-th request of the previous round is greater than or equal to a request time interval that corresponds to said i-th request, and performing sending only if the judgment result is yes, which can thus avoid a communication conflict.

The present invention also provides a relay protection device comprising at least one memory and at least one processor. The memory is used to store instructions. The processor is used for executing the communication method that is based on a polling mechanism as described in any of the above embodiments according to the instructions stored on the memory.

An embodiment of the present invention further provides a readable storage medium. The readable storage medium stores a machine-readable instruction, and when the machine-readable instruction is executed by a machine, the machine executes the communication method based on a polling mechanism as described in any of the above-described embodiments.

The readable medium stores a machine-readable instruction that, when executed by a processor, causes the processor to execute any one of the above-described methods.

Specifically, a system or device equipped with a readable storage medium may be provided; software program code realizing a function of any one of the embodiments above is stored on the readable storage medium, and a computer or processor of the system or device is caused to read and execute a machine-readable instruction stored in the readable storage medium.

In this case, the function of any one of the above embodiments may be performed by a program code read from the readable medium, so a machine-readable code and a readable storage medium for storing the machine-readable code constitute a part of the present invention.

Examples of readable storage media include floppy disks, hard disks, magneto-optical disks, optical disks (such as CD-ROM, CD-R, CD-RW, DVD-ROM, DVD-RAM, DVD-RW, DVD+RW), magnetic tapes, non-volatile memory cards and ROM. Optionally, the program code may be downloaded from a server computer or a cloud via a communication network.

Those skilled in the art should understand that various changes in form and modifications may be made to the embodiments disclosed above without departing from the substance of the invention. Thus, the scope of protection of the present invention shall be defined by the appended claims.

It should be noted that not all steps and units in the above-described process flows and system structure diagrams are necessary, and some steps or units may be omitted according to actual needs. The sequence in which the steps are executed is not fixed, and may be adjusted as needed. The device structure described in the above embodiments may be either a physical structure or a logical structure, which means that some units may be implemented by the same physical entity, or some units may be implemented by a plurality of physical entities separately or by some parts of a plurality of independent devices jointly.

In the embodiments above, a hardware unit may be realized in a mechanical or an electrical manner. For example, a hardware unit or processor may comprise a permanently dedicated circuit or logic (for example, a specialized processor, FPGA, or ASIC) to complete corresponding operations. A hardware unit or processor may further comprise programmable logic or circuits (such as general-purpose processors or other programmable processors), which may be temporarily set by software to complete corresponding operations. Particular embodiments (mechanical, or dedicated permanent circuitry, or temporarily set circuitry) may be determined based on considerations of cost and time.

The above are merely preferred embodiments of the present invention, which are not intended to limit it. Any amendments, equivalent substitutions or improvements etc. made within the spirit and principles of the present invention shall be included in the scope of protection thereof.

## Claims

1. A communication method that is based on a polling mechanism, the communication method being used for a power automation system, the power automation system comprising one master node and multiple slave nodes, the master node and the slave nodes communicating with each other on the basis of a polling mechanism, and the master node needing to send L requests each round, wherein L is a positive integer, and the communication method comprising:
if an i-th request in a present round that is sent by the master node is received, then generating a target response to said i-th request, wherein i is a positive integer and i ≤ L,
**characterized in that** each request corresponds to one request time interval and one response time period, the request time interval indicating a minimum time period of the interval between the master node sending the i-th request in the present round and sending the i-th request in the previous round, and the response time period indicating a maximum time period from the master node having sent the i-th request to receiving a response sent by the slave node, and the communication method further comprising:
judging whether a first time interval is greater than a first preset interval, and judging whether a new request sent by the master node is received currently, the first time interval being determined according to a receiving time of received said i-th request and a first actual time currently, and the first preset interval being determined according to a response time period corresponding to the i-th request; and
if the judgment results are both no, then sending the target response to the master node.

2. The communication method as claimed in claim 1, **characterized by**, after it is determined that a new request sent by the master node has not been received, and before the target response is sent to the master node, further comprising:
acquiring a current second actual time;
determining a second time interval according to the receiving time and the second actual time;
judging whether the second time interval is greater than a second preset interval, where the second preset interval = response time period corresponding to the i-th request - k/baud-rate, wherein k is a preset calibration factor; and
if the judgment result is no, then triggering an operation to send the target response to the master node.

3. The communication method as claimed in claim 2, **characterized in that** if the judgment result of judging whether the second actual time interval is greater than the second preset interval is yes, then the target response is discarded.

4. The communication method as claimed in claim 1, **characterized in that** after the judgment result of judging whether the first time interval is greater than the first preset interval is no, an operation is executed to judge whether a new request sent by the master node is currently received.

5. The communication method as claimed in claim 1, **characterized in that** if any judgment result of judging whether a first time interval is greater than a first preset interval and of judging whether a new request sent by the master node is currently received is yes, then the target response is discarded.

6. The communication method as claimed in claim 1, **characterized by**, when an i-th request sent by the master node is received, further comprising: attaching a special identifier to the i-th request;
when starting to execute generating a target response to the i-th request, further comprising: eliminating the special identifier; and
the step of judging whether a new request sent by the master node is currently received comprising: judging whether there is currently a request with a special identifier, and if the judgment result is no, then determining that a new request sent by the master node has not been received currently.

7. The communication method as claimed in any one of claims 1 - 6, **characterized in that** the first time interval is determined to be equal to the response time period corresponding to the i-th request; or
the first time interval = response time period corresponding to the i-th request - k/baud-rate, wherein k is a preset calibration factor.

8. A communication method that is based on a polling mechanism, the communication method being used for a power automation system, the power automation system comprising one master node and multiple slave nodes, the master node and the slave nodes communicating with each other on the basis of a polling mechanism, and the master node needing to send L requests each round, wherein L is a positive integer, **characterized in that**
each request corresponds to one request time interval and one response time period, the request time interval indicating a minimum time period of the interval between sending an i-th request in the present round and sending an i-th request in the previous round, and the response time period indicating a maximum time period from the master node having sent a request to receiving a response sent by the slave node, and the communication method comprising:
if it is identified that an i-th request must be sent to a slave node, the i-th request being one of L requests in the present round, then judging whether a third time interval between said i-th request and an i-th request sent in the previous round is greater than or equal to a request time interval corresponding to said i-th request, wherein i is a positive integer and i ≤ L; and
if the judgment result is yes, then sending said i-th request to the slave node.

9. The communication method as claimed in claim 8, **characterized by**, after the i-th request is sent to the slave node, further comprising:
judging whether a target response sent by the slave node is received within a response time period corresponding to an i-th request, the target response being generated on the basis of said i-th request; and
if the judgment result is no, then determining that said i-th request is an abnormal request.

10. The communication method as claimed in claim 9, **characterized by**, after said i-th request is determined to be an abnormal request, further comprising:
judging whether i is less than or equal to L; and
if the judgment result is yes, then updating the value of i + 1 to i, and returning to executing an operation to identify whether an i-th request must be sent to a slave node.

11. A communication apparatus that is based on a polling mechanism, the communication apparatus being used for a power automation system, the power automation system comprising one master node and multiple slave nodes, the master node and the slave nodes communicating with each other on the basis of a polling mechanism, and the master node needing to send L requests each round, wherein L is a positive integer, and the communication apparatus comprising:
a generating unit, used for: if an i-th request in a present round that is sent by the master node is received, generating a target response to said i-th request, wherein i is a positive integer and i ≤ L,
**characterized in that** each request corresponds to one request time interval and one response time period, the request time interval indicating a minimum time period of the interval between the master node sending an i-th request in the present round and sending an i-th request in the previous round, and the response time period indicating a maximum time period from the master node having sent an i-th request to receiving a response sent by the slave node, and the communication apparatus further comprising:
a first judgment unit, used for judging whether a first time interval is greater than a first preset interval, and judging whether a new request sent by the master node is received currently, the first time interval being determined according to a receiving time of received said i-th request and a first actual time currently, and the first preset interval being determined according to a response time period corresponding to an i-th request; and
a first sending unit, used for sending the target response to the master node.

12. The communication apparatus as claimed in claim 11, **characterized by** further comprising:
an acquisition unit, used for acquiring a second actual time currently;
a determining unit, used for determining a second time interval according to the receiving time and the second actual time; and
a second judgment unit, used for judging whether the second time interval is greater than a second preset interval, where the second preset interval = response time period corresponding to the i-th request - k/baud-rate, wherein k is a preset calibration factor, and if the judgment result is no, then triggering the first sending unit.

13. The communication apparatus as claimed in claim 11, **characterized in that** the second judgment unit is further used for: if the judgment result of judging whether the second actual time interval is greater than the second preset interval is yes, triggering a discarding unit; and
the communication apparatus further comprising the discarding unit, and the discarding unit being used for discarding the target response.

14. The communication apparatus as claimed in claim 11, **characterized by** further comprising:
a marking unit, used for: when an i-th request sent by the master node is received, attaching a special identifier to said i-th request; and
an eliminating unit, used for: when starting to execute generating a target response to the i-th request, eliminating the special identifier.

15. The communication apparatus as claimed in any one of claims 11 - 14, **characterized in that** the first time interval is determined to be equal to a response time period corresponding to an i-th request; or
the first time interval = response time period corresponding to the i-th request - k/baud-rate, wherein k is a preset calibration factor.

16. A communication apparatus that is based on a polling mechanism, the communication apparatus being used for a power automation system, the power automation system comprising one master node and multiple slave nodes, the master node and the slave nodes communicating with each other on the basis of a polling mechanism, and the master node needing to send L requests each round, wherein L is a positive integer, **characterized in that**
each request corresponds to one request time interval and one response time period, the request time interval indicating a minimum time period of the interval between sending an i-th request in the present round and sending an i-th request in the previous round, and the response time period indicating a maximum time period from the master node having sent a request to receiving a response sent by the slave node, and the communication apparatus comprising:
an identification unit, used for identifying whether an i-th request must be sent to a slave node, the i-th request being one of L requests in the present round, and if the identification result is yes, then triggering a third judgment unit, wherein i is a positive integer and i ≤ L;
the third judgment unit, used for judging whether a third time interval between said i-th request and an i-th request sent in the previous round is greater than or equal to a request time interval corresponding to said i-th request, and if the judgment result is yes, then triggering a second sending unit; and
the second sending unit, used for sending the i-th request to the slave node.

17. The communication apparatus as claimed in claim 16, **characterized by** further comprising:
a fourth judgment unit, used for judging whether a target response sent by the slave node is received within a response time period corresponding to an i-th request, the target response being generated on the basis of said i-th request; and
if the judgment result is no, then determining that said i-th request is an abnormal request.

18. The communication apparatus as claimed in claim 17, **characterized by** further comprising:
a fifth judgment unit, used for judging whether i is less than or equal to L, and if the judgment result is yes, triggering an updating unit; and
the updating unit, used for updating a value of i + 1 to i, then triggering the identification unit.

19. A relay protection apparatus, **characterized by** comprising:
at least one memory, used for storing an instruction; and
at least one processor, used for executing the communication method that is based on a polling mechanism as claimed in any one of claims 8 - 10, according to the instruction that is stored in the memory.
